Europäisches Patentamt

European Patent Office

Office européen des brevets

(11) Veröffentlichungsnummer: **0 241 979 B1**

(12) # EUROPÄISCHE PATENTSCHRIFT

(45) Veröffentlichungstag der Patentschrift: **21.11.91**

(51) Int. Cl.⁵: **H02M 1/15**, H02M 3/155

(21) Anmeldenummer: **87200622.6**

(22) Anmeldetag: **03.04.87**

(54) Schaltungsanordnung zur Verringerung eines in einer Last hervorgerufenen Störstromes.

(30) Priorität: **12.04.86 DE 3612380**
**12.04.86 DE 3612378**

(43) Veröffentlichungstag der Anmeldung:
**21.10.87 Patentblatt 87/43**

(45) Bekanntmachung des Hinweises auf die
Patenterteilung:
**21.11.91 Patentblatt 91/47**

(84) Benannte Vertragsstaaten:
**DE FR GB NL**

(56) Entgegenhaltungen:
**FR-A- 2 132 235**
**US-A- 3 414 824**
**US-A- 3 825 815**
**US-A- 3 875 539**

**IBM TECHNICAL DISCLOSURE BULLETIN,
Band 14, Nr. 2, Juli 1971, Seiten 523-524, New
York, US; H.A. HIGUCHI: "Active equivalent
series resistance filter"**

(73) Patentinhaber: **Philips Patentverwaltung
GmbH
Wendenstrasse 35 Postfach 10 51 49
W-2000 Hamburg 1(DE)**

(84) Benannte Vertragsstaaten:

**DE**

Patentinhaber: **N.V. Philips' Gloeilampenfabrieken
Groenewoudseweg 1
NL-5621 BA Eindhoven(NL)**

(84) Benannte Vertragsstaaten:
**FR GB NL**

(72) Erfinder: **Albach, Manfred, Dr.
Hasbach 5
W-5100 Aachen(DE)**
Erfinder: **Wegener, Armin
Kleinmarschierstrasse 61
W-5100 Aachen(DE)**
Erfinder: **Raets, Hubert
Exdel 32
NL-6391 AJ Nieuwenhagen(NL)**

(74) Vertreter: **Hartmann, Heinrich, Dipl.-Ing. et al
Philips Patentverwaltung GmbH Wendenstrasse 35 Postfach 10 51 49
W-2000 Hamburg 1(DE)**

## Beschreibung

Die Erfindung betrifft eine Schaltungsanordnung mit einer Last, die mit einer Speisespannungsquelle gekoppelt ist, gemäß dem Oberbegriff des Hauptanspruchs.

Aus der EP 00 59 053 ist eine Schaltungsanordnung bekannt, in der eine Speisespannungsquelle, die eine Wechselspannung liefert, über ein Filter mit einer Last, einem Schaltnetzteil, gekoppelt ist. Das Schaltnetzteil verursacht aufgrund von Schaltvorgängen einen Störstrom, dessen Frequenz wesentlich höher ist als die des Stromes der Speisespannungsquelle und der auf die Speisespannungsquelle zurückwirkt. Zur Verhinderung dieses Störstromes dient das aus einer Spule und einem Kondensator bestehende Filter. Einerseits ist die Spule an die Speisespannungsquelle und andererseits mit der Last und dem parallel zur Last liegenden Kondensator verbunden. Durch die Verwendung einer Spule zur Reduzierung des Störstromes wird eine wesentliche Verkleinerung der Schaltungsanordnung verhindert.

Aus der US-PS 38 25 815 ist ein elektrisches Energieversorgungssystem bekannt. Die darin beschriebene Schaltungsanordnung zur Verringerung eines in einer Last hervorgerufenen Störstromes enthält eine Kompensationsschaltung, welche in einem Verbindungzweig zwischen Last und einer Speisespannungsquelle angeordnet ist. Die Kompensationsschaltung umfaßt eine gesteuerte Signalquelle mit einem Kondensator. Die gesteuerte Signalquelle ist als Brückenschaltung ausgebildet, die in jedem Zweig Schalttransistoren enthält. Die Schalttransistoren werden von einer Steuerschaltung so angesteuert, daß die in gegenüberliegenden Brückenzweigen angeordneten Transistoren jeweils leitend bzw. gesperrt sind. Der Kompensationsstrom fließt über einen Transistor und den Kondensator zum Transistor im gegenüberliegenden Zweig. An einem Transistor fällt die halbe Speisespannung ab, wodurch Transistoren mit einer hohen Spannungsfestigkeit verwendet werden müssen. Parallel zur Last ist ein Spannungsteiler geschaltet, der der Steuerschaltung eine Spannung liefert, welche der Störspannung und der Speisespannung proportional ist. Die Steuerschaltung ermittelt aus dieser Spannung die Dauer des leitenden bzw. gesperrten Zustandes eines Transistors. Mit Hilfe der Brückenschaltung wird ein den Störstrom weitgehend kompensierender Strom erzeugt. Bedingt durch die nichtidealen Bauelemente in der gesteuerten Signalquelle und der Steuerschaltung wird der Störstrom nicht vollständig kompensiert.

Aus der US-PS 34 14 824 ist ein aktives Tiefpaßfilter bekannt, welches zwischen einer Speisespannungsquelle und einer Last, z.B. einem Fernschreiber, geschaltet ist. Die variable Last verursacht Störströme, die von dem aktiven Filter weitgehend kompensiert werden. Das aktive Filter enthält eine Kompensationsschaltung, ein induktives Element und ein kapazitives Element. Die von der Last verursachten Störströme werden teilweise von dem induktiven und kapazitiven Element beseitigt. Eine weitere Reduzierung wird durch die Kompensationsschaltung erreicht. In dieser Kompensationsschaltung mißt ein Meßwiderstand, der in einer Zuleitung zwischen speisespannungsquelle und Kompensationsschaltung angeordnet ist, den vorhandenen Störstrom, der über einen Spannungsverstärker einem Spannungs-Stromwandler zugeführt wird. Der Spannungs-Stromwandler erzeugt einen Kompensationsstrom, der dem vorhandenen Störstrom entgegenwirkt. Diesem Kompensationsstrom ist ein Gleichstrom überlagert, weil die Kompensationsschaltung von der Speisespannungsquelle mit Energie versorgt wird.

Der Erfindung liegt die Aufgabe zugrunde, eine Schaltungsanordnung der eingangs genannten Art zu schaffen, die eine einfach ausgebildete Kompensationsschaltung enthält, welche eine weitgehende Reduktion des Störstromes bewirkt.

Diese Aufgabe wird durch die Merkmale des kennzeichnenden Teils des Anspruches 1 gelöst.

Bei der erfindungsgemäßen Schaltungsanordnung wird mit der Schaltung ein Strom in den Kondensator geleitet, der ungefähr nach Phase und Größe dem Störstrom entspricht. Der Störstrom wird durch die gesteuerte Signalquelle über den Kondensator weitgehend geleitet, so daß nur ein kleiner Anteil des Störstromes zur Speisespannungsquelle gelangen kann. Das Steuersignal, das der Signalquelle zugeführt wird, hängt dabei von dem Störstrom ab. Das Steuersignal wird hierbei mittels zweier Meßwiderstände und der Verstärkerschaltung gewonnen. Der Strom, der durch den ersten Meßwiderstand fließt, enthält den gesamten Störstrom. In dem zweiten Meßwiderstand fließt ein Strom, der noch einen geringen Anteil des Störstromes aufweist. Die Ströme, welche durch die beiden Meßwiderstände fließen, verursachen einen Spannungsfall. Diese Spannungen werden in der Verstärkerschaltung voneinander subtrahiert und bilden das Steuersignal für die gesteuerte Signalquelle. Durch die zweite Messung am zweiten Meßwiderstand ergibt sich eine weitere Verringerung des Störstromes. An dem Kondensator fällt die Spannungsdifferenz zwischen der Spannung an der Last und der Spannung am Ausgang der gesteuerten Schaltquelle ab, die in der Regel eine Größenordnung kleiner ist als die Spannung an der Last. Die in der gesteuerten Signalquelle verwendeten Transistoren brauchen daher keine Spannungsfestigkeit zu haben, die der Spannung an der Last entspricht.

In der US-PS 38 75 539 ist eine Schaltungsanordnung zum Unterdrücken von einer Hochspannung überlagerten Welligkeiten ("Ripple") bei einer Hochspannungs-Energieversorgung beschrieben. Dieser Schaltung liegt jedoch ein anderes Prinzip zugrunde als der vorliegenden Erfindung. Dies wird deutlich, wenn in der einzigen Figur der US-PS 38 75 539 zur übersichtleren Darstellung alle Schutzelemente, d.h. alle Dioden und die Widerstände mit den dortigen Bezugszeichen 29, 31 und 33 weggelassen werden und die Darlingtonschaltung aus den Transistoren Q1 und Q2, die nur zur höheren Stromverstärkung dient, durch einen einzelnen Transistor ersetzt wird. Zwischen den Anschlüssen 3 und der Quelle 1 liegt dann eine Serienschaltung aus der Last 9 und dem Widerstand 21 vor, zu der parallel der Kondensator 7 geschaltet ist. Parallel zur Last liegt außerdem der Kondensator 11 in Reihe mit der Basis-Emitter-Strecke des Ersatztransistors. Dessen Basis-Kollektor-Strecke wird durch den Widerstand 27 überbrückt. Außerdem führt vom Anschluß 3 der Quelle 1 ein Widerstand 25 an den Basisanschluß des Ersatztransistors, d.h. an den einen Anschluß des Kondensators 11, und außerdem ist die Spannungsquelle 19 mit ihrem negativen Pol an diesem Anschluß 3 angeschlossen. Der positive Pol der Spannungsquelle 19 liegt am Kollektoranschluß des Ersatztransistors.

Bei dieser Schaltungsanordnung wird die Spannungswelligkeit an der Last 9 durch einen Serienregler ausgeglichen. Der Widerstand 21 liegt in Serie zur Last 9 und wird vom gesamten Laststrom durchflossen. Da der Widerstand 21 einen nennenswerten Betrag hat, liegt auch hier wie bei allen Serienreglern das Problem eines sehr schlechten Wirkungsgrades vor. Bei ansteigender Spannung am Kondensator 7 fließt ein Strom durch den Kondensator 11 und vergrößert den durch den Spannungteiler aus den Widerständen 25 und 27 eingestellten Basisstrom durch den Ersatztransistor. Der dadurch vergrößerte Transistorstrom (in der Kollektor-Emitter-Strecke des Ersatztransistors) ruft einen größeren Spannungsabfall am Widerstand 21 hervor. Damit wird die Spannungsänderung am Kondensator 7, die der Welligkeit zuzurechnen ist, an der Last 9 nicht merkbar.

Das aus der US-PS 38 75 539 bekannt Prinzip kann insgesamt nur zur Kompensation einer Spannungswelligkeit durch Erzeugung einer in Reihe liegenden, gegenphasigen Spannungswelligkeit verwendet werden. Zur verlustarmen Kompensation eines Störstromes durch die Speisequelle, wie sie die Erfindung gemäß der vorliegenden Anmeldung ermöglicht, kann die Schaltungsanordnung gemäß US-PS 38 75 539 nicht herangezogen werden.

Aus der französischen Patentanmeldung 21 32 235 ist eine Schaltungsanordnung bekannt, die ebenfalls keine Anregung zur Lösung der vorliegenden Aufgabe liefert. Die dort beschriebene Schaltung ist nämlich nur bei Quellen kleinerer Spannungen anwendbar, wie sie z.B. Batterieladegeräten auftreten. Bei hohen Spannungen treten insbesondere in der Ausgangsstufe des Verstärkers G durch eine Gleichstromkomponente des Stromes i höhere Verluste auf. Außerdem ist hier die Ausgangsstufe des Verstärkers als "Klasse-A-Verstärker" ausgebildet, der naturgemäß höhere Verluste aufweist. Demgegenüber ermöglicht die Lehre gemäß der vorliegenden Anmeldung auch die verlustarme Kompensation von Störströmen bei Speisequellen mit hohen Versorgungsspannungen.

Die erfindungsgemäße Schaltungsanordnung kann entweder einen oder mehrere Verbindungszweige enthalten. Mit Hilfe der gesteuerten Signalquelle in jedem Verbindungszweig der Kompensationsschaltung wird ein Strom in den mit der Signalquelle verbundenen Kondensator geleitet, der mit dem in einer Zuleitung gemessenen Störstrom weitgehend übereinstimmt. In jedem Verbindungszweig wird ein Teil des Störstromes weitgehend abgeleitet, so daß nur ein kleiner Anteil des Störstromes zur Speisespannungsquelle gelangen kann. Das Steuersignal, das der jeweiligen Signalquelle zugeführt wird, hängt von dem Strom in einer Zuleitung ab. Es ist nicht notwendig, daß diese Abhängigkeit linear ist.

Es sei noch erwähnt, daß aus der US-PS 34 14 824 ein aktives Tiefpaßfilter bekannt ist, welches zwischen einer Speisespannungsquelle und einer variablen Last, z.B. einem Fernschreiber, geschaltet wird. Die variable Last verursacht Störströme, die von dem aktiven Filter weitgehend kompensiert werden. Das aktive Filter enthält eine Kompensationsschaltung, ein induktives Element und ein kapazitives Element. Die von der Last verursachten Störströme werden weitgehend von dem induktiven und kapazitiven Element beseitigt. Eine weitere Reduzierung wird durch die Kompensationsschaltung erreicht. In dieser Kompensationsschaltung mißt ein Meßwiderstand den vorhandenen Störstrom, der über einen Spannungsverstärker einem Spannungs-Stromwandler zugeführt wird. Der Spannungs-Stromwandler erzeugt einen Gegenstrom, der dem vorhandenen Störstrom entgegenwirkt. Diesem Gegenstrom ist ein Gleichstrom überlagert. Die Kompensationsschaltung wird von der Speisespannungsquelle mit Energie versorgt. Aus diesem Grund ist dem Gegenstrcm ein Gleichstrom überlagert. Hierdurch sind außer den in den induktiven und kapazitiven Element entstehenden Verlusten, zusätzliche hohe Verluste gegeben. Die Speisespannungsquelle kann, da sie die Kompensationsschaltung mit Energie versorgt, prinzipiell nur eine Gleichspannungsquelle sein.

In der erfindungsgemäßen Schaltungsanordnung wird der Gleichanteil durch einen Kondensator im Verbindungszweig unterdrückt. Außerdem fällt an diesem Kondensator der größte Teil der Spannung an der Last ab. Die Kompensationsschaltung erzeugt hierbei einen dem Störstrom entgegengesetzten Strom ohne einen Gleichanteil. Durch diese Realisierung sind die Verluste in der Kompensationsschaltung sehr viel geringer als in der US-PS 34 14 824. Die Kompensationsschaltung wird außerdem nicht von der Speisespannungsquelle mit Energie versorgt, sondern erhält diese von einer externen Energiequelle. Wenn die Last als Schaltnetzteil ausgebildet ist, kann die Kompensationsschaltung die Energie von der Last erhalten.

Weist die Schaltungsanordnung nur einen Verbindungszweig auf, so ist vorgesehen, daß aus der an einem ersten Meßwiderstand, der in einer Zuleitung zwischen der Last und der Reihenschaltung aus dem Kondensator und der Signalquelle angeordnet ist, abfallenden Spannung das Steuersignal gewonnen wird.

Die Spannung an dem Meßwiderstand ist abhängig von dem Strom, der von der Speisespannungsquelle geliefert wird und dem von der Last hervorgerufenen Störstrom. Um ein nur von dem Störstrom abhängiges Signal zu bekommen, ist vorgesehen, daß eine Verstärkerschaltung, der an ihrem ersten Eingang die am ersten Meßwiderstand abfallende Spannung und der an ihrem zweiten Eingang einer Vergleichsspannung zugeführt wird, die dem zeitlichen Verlauf des Stromes der Speisespannungsquelle annähernd entspricht, eine Ausgangsspannung bildet, die das Steuersignal darstellt. Es läßt sich ebenso mittels eines Kondensators, der zwischen dem Meßwiderstand und der gesteuerten Signalquelle angeordnet ist, ein vom Strom der Speisespannungsquelle unabhängiges Signal gewinnen. Die Kapazität des Kondensators muß dabei so gewählt werden, daß er das niederfrequente vom Strom der Speisespannungsquelle hervorgerufene Signal unterdrückt.

Die Vergleichsspannung wird an einen zweiten Meßwiderstand gewonnen, der zwischen der Speisespannungsquelle und dem Verbindungszweig angeordnet ist und an dem auch der infolge der nicht vollständigen Kompensation des Störstromes verbleibende restliche Störstrom gemessen wird.

In einer Weiterbildung der Erfindung ist vorgesehen, daß die Kompensationsschaltung mindestens zwei Verbindungszweige enthält, daß erste Meßwiderstände in einer Zuleitung jeweils zwischen den Verbindungszweigen und zwischen der Last und einem Verbindungszweig angeordnet sind und daß aus der in dem jeweiligen ersten Meßwiderstand abfallenden Spannung das Steuersignal für die jeweilige Signalquelle gewonnen wird. In den ersten Meßwiderständen wird der Strom der Speisespannungsquelle mit dem Störstrom gemessen.

Die Spannung an den ersten Meßwiderständen ist abhängig von dem Strom, der von der Speisespannungsquelle geliefert wird und dem von der Last hervorgerufenen Störstrom. Um ein nur von dem Störstrom abhängiges Signal zu bekommen, ist bei der erfindungsgemäßen Schaltungsanordnung mit mindestens zwei Verbindungszweigen vorgesehen, daß jeder Signalquelle eine Verstärkerschaltung zugeordnet ist, der an ihrem ersten Eingang die am jeweiligen ersten Meßwiderstand abfallende Spannung und an ihrem zweiten Eingang eine Vergleichsspannung zugeführt wird, die dem zeitlichen Verlauf des Stromes der Speisespannungsquelle annähernd entspricht, und die eine Ausgangsspannung bildet, die das Steuersignal darstellt. Auch bei dieser Weiterbildung könnte an Stelle der Verstärkerschaltung mittels eines Kondensators, der zwischen dem jeweiligen ersten Meßwiderstand und der jeweiligen gesteuerten Signalquelle angeordnet ist, ein vom Strom der Speisespannungsquelle unabhängiges Signal gewonnen werden. Die Kapazität des Kondensators muß dabei so gewählt werden, daß er das niederfrequente, vom Strom der Speisespannungsquelle hervorgerufene Signal unterdrückt.

Die Vergleichspannung für die jeweilige Verstärkerschaltung kann an zweiten Meßwiderständen gewonnen werden, die jeweils in einer Zuleitung zwischen den Verbindungszweigen und zwischen der Speisespannungsquelle und einem Verbindungszweig angeordnet sind und die jeweils mit einem Verbindungszweig und einem ersten Meßwiderstand verbunden sind, an dem die andere Eingangsspannung der Verstärkerschaltung abfällt.

In einer Ausführungsform für jede gesteuerte Signalquelle ist vorgesehen, daß dieser einen Leistungsverstärker mit einer komplementären Endstufe umfaßt.

Die Erfindung kann in einer solchen Schaltungsanordnung verwendet werden, die als Last ein Schaltnetzteil enthält.

Anhand der Zeichnungen wird im folgenden die Erfindung näher erläutert. Es zeigen:

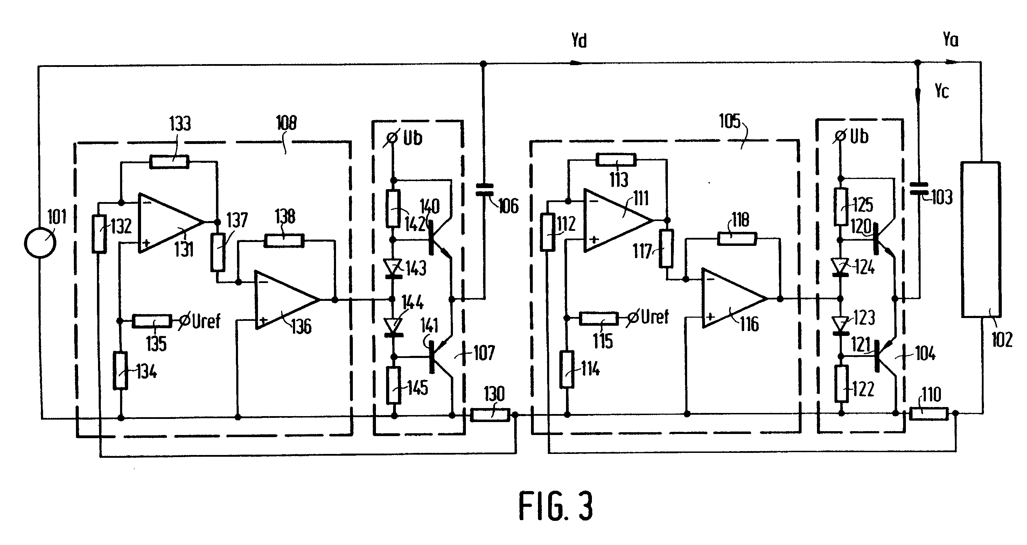

Fig. I und Fig. 3 zwei Beispiele der grundsätzlichen Schaltungsanordnung und

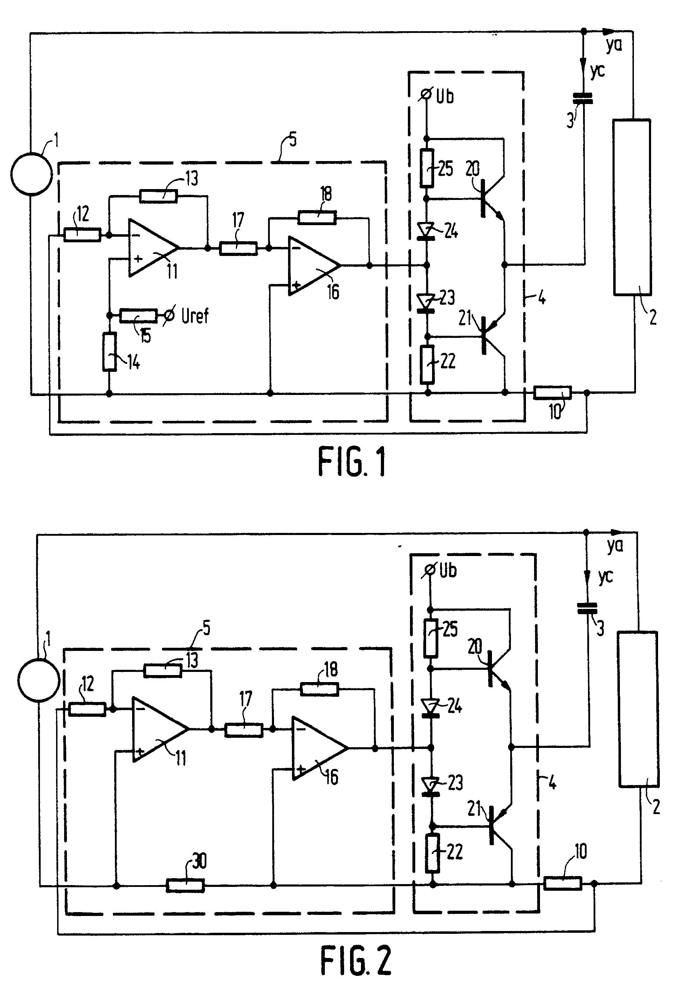

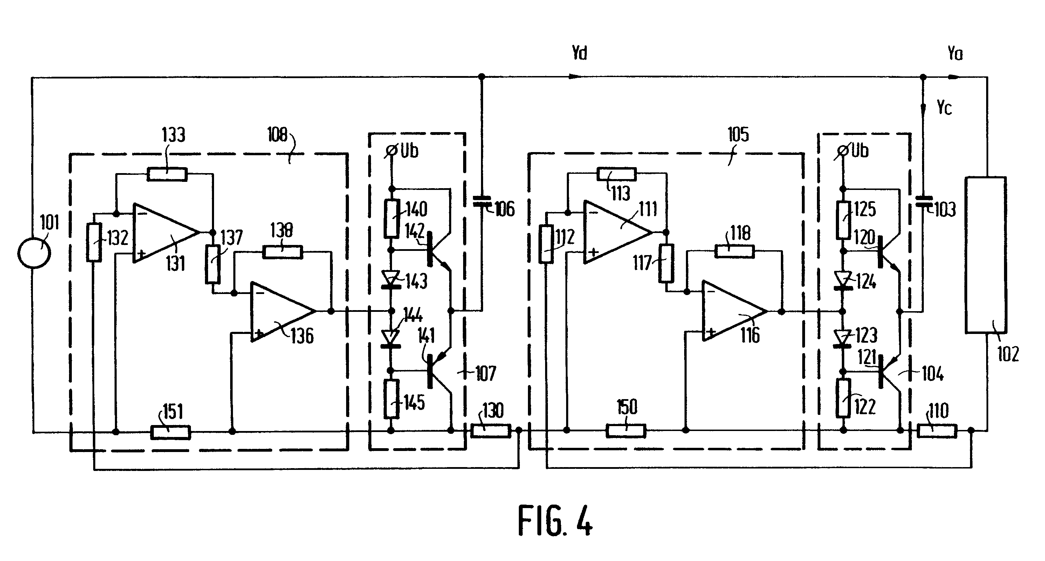

Fig. 2 und Fig. 4 zwei Ausführungsbeispiele der erfindungsgemäßen Schaltungsanordnung mit einen bzw. zwei Verbindungszweigen.

Die Schaltungsanordnung gemäß der Fig. I weist eine Speisespannungsquelle I auf, die z.B. eine Gleichspannung von 50 V abgibt. Eine Gleichspannung hat nur einen Anteil bei einer Frequenz von Null. Die Speisespannungsquelle I versorgt über Zuleitungen eine Last 2, die z.B. ein als Aufwärts-Spannungswandler ausgebildetes Schaltnetzteil sein kann. Derartige Schaltnetzteile werden in der Regel bei Schaltfrequenzen von ungefähr 20 kHz bis 200 kHz betrieben. Diese Schaltvorgänge rufen einen Störstrom im Eingangsstrom der Spei-

sespannungsquelle 1 hervor, dessen Frequenzspektrum Anteile bei der Schaltfrequenz und deren Harmonischen aufweist.

Zur Verringerung dieses Störstromes ist eine Kompensationsschaltung vorgesehen, die einen Kondensator 3, eine gesteuerte Signalquelle 4 und eine Verstärkerschaltung 5 enthält. Der Strom Ya, der durch die Last fließt und der den Störstrom enthält, ruft an einem Meßwiderstand 10 einen Spannungsabfall hervor. Der Widerstand 10 sollte vorzugsweise so gewählt werden, daß er einerseits zur Begrenzung der an ihm entstehenden Verluste möglichst klein ist, andererseits aber die an ihm abfallende Spannung einen genügend hohen Pegel zur Ansteuerung der Verstärkerschaltung 5 aufweist. Der Meßwiderstand 10 ist zwischen dem negativen Bezugspunkt der Speisespannungsquelle 1 und einem Anschlußpunkt der Last 2 angeordnet. Am Verbindungspunkt zwischen der Last 2 und dem Meßwiderstand 10 ist die Verstärkerschaltung 5 angeschlossen. Die Verstärkerschaltung 5 enthält einen Verstärker 11, dessen invertierender Eingang über einen Widerstand 12 mit dem oben erwähnten Verbindungspunkt und über einen Widerstand 13 mit seinem Ausgang verbunden ist. An dem nichtinvertierenden Eingang des Verstärkers 11 ist ein mit dem negativen Bezugspunkt der Speisespannungsquelle 1 verbundener Widerstand 14 und ein mit einer Referenzspannungsquelle Uref verbundener Widerstand 15 angeschlossen. Des weiteren ist in der Verstärkerschaltung 5 ein Verstärker 16 enthalten, dessen nichtinvertierender Eingang an den negativen Bezugspunkt angeschlossen ist und dessen invertierender Eingang über einen Widerstand 17 mit dem Ausgang des Verstärkers 11 und über einen Widerstand 18 mit seinem Ausgang verbunden ist. Der Ausgang des Verstärkers 16 bildet den Ausgang der Verstärkerschaltung 5.

In der Verstärkerschaltung 5 wird die Differenz zwischen der am nichtinvertierenden Eingang des Verstärkers 11 liegenden Vergleichsspannung, die ein Abbild der von der Speisespannungsquelle 1 gelieferten Spannung ist, und der an dem ersten Meßwiderstand abfallenden Spannung gebildet. Die Spannung am Ausgang der Verstärkerschaltung 5 ist abhängig von dem von der Last 2 erzeugten Störstrom. Die Widerstände 12 bis 15 und 17, 18 und die Referenzspannung Uref, die eine Größenordnung kleiner ist als die Gleichspannung der Speisespannungsquelle 1, können so gewählt werden, daß eine gleichspannungsmäßige Anpassung der Verstärkungsschaltung 5 und der folgenden gesteuerten Signalquelle 4 vorhanden ist.

Die gesteuerte Signalquelle 4 enthält einen Leistungsverstärker mit einer komplementären Endstufe der Klasse AB. Die komplementäre Endstufe enthält einen NPN-Transistor 20 und einen PNP-Transistor 21. Der Kollektor des Transistors 21 ist an den negativen Bezugspunkt der Speisespannungsquelle 1 angeschlossen und die Basis einerseits an einen mit dem negativen Bezugspunkt verbundenen Widerstand 22 und andererseits an die Kathode einer Diode 23. Die Anode der Diode 23 ist einerseits mit dem Ausgang der Verstärkerschaltung 5, die die Steuerspannung liefert, und andererseits mit der Kathode einer Diode 24 verbunden. An den Anschlußpunkt zwischen der Anode der Diode 24 und einem Widerstand 25 ist die Basis des Transistors 20 gelegt. Eine Versorgungsspannung Ub, die eine Größenordnung geringer ist als die Gleichspannung der Speisespannungsquelle 1, ist an den Kollektor des Transistors 20 und an den anderen Anschlußpunkt des Widerstandes 25 gelegt. Die Emitter der beiden Transistoren 20 und 21 sind über einen Verbindungspunkt mit dem Kondensator 3 verbunden, der wiederum an den positiven Anschlußpunkt der Speisespannungsquelle 1 gelegt ist.

Die gesteuerte Signalquelle 4 treibt abhängig von der von der Verstärkerschaltung 5 gelieferten Ausgangsspannung einen Strom Yc, der ungefähr gleich dem Störstrom ist, durch den Kondensator 3. Abhängig von der angelegten Steuerspannung ist entweder der Transistor 20 oder der Transistor 21 leitend. Wenn der Transistor 20 leitend ist, wird der erforderliche Strom Yc aus der Spannungsquelle gezogen, die die Spannung Ub liefert und die an den Masseanschluß der Speisespannungsquelle 1, was hier nicht näher dargestellt ist, angeschlossen ist. Ist der Transistor 20 leitend, fließt der Strom Yc über diesen an den negativen Bezugspunkt. Der Kondensator 3 verhindert, daß die Gleichspannung der gesteuerten Signalquelle auf die Speisespannungsquelle 1 und die Last 2 einwirkt. An dem Kondensator 3 fällt die Spannungsdifferenz zwischen der Spannung an der Last 2 und der Spannung am Ausgang der Signalquelle 4 ab, die in der Regel eine Größenordnung kleiner ist als die Spannung an der Last 2.

Bedingt durch die nichtidealen Bauelemente und die Nichtlinearität der Signalquelle 4 wird keine vollständige Kompensation des Störstromes erreicht.

In einem Ausführungsbeispiel, das in der Fig. 2 dargestellt ist, wird eine Möglichkeit gezeigt, wie eine weitere Reduzierung des Störstromes erreicht werden kann. Die Schaltungselemente mit den gleichen Funktionen wie in Fig. 1 sind mit denselben Bezugszeichen versehen. Ein Unterschied im Ausführungsbeispiel der Fig. 2 ergibt sich gegenüber dem Ausführungsbeispiel gemäß der Fig. 1 nur in der Verstärkerschaltung 5. An der Verbindung des Meßwiderstandes 10 und der Last 2 ist der Widerstand 12 angeschlossen, der andererseits mit dem invertierenden Eingang des Verstärkers 11 verbunden ist. Der invertierende Eingang ist über den

Widerstand 13 mit seinem Ausgang verbunden. Der nichtinvertierende Eingang ist in diesem Ausführungsbeispiel mit dem negativen Anschluß der Speisespannungsquelle 1 verbunden. An dem nichtinvertierenden Eingang des Verstärkers 11 liegt eine Spannung, die über einem zweiten Meßwiderstand 30 abfällt, der zwischen dem negativen Anschluß der Speisespannungsquelle 1 und dem ersten Meßwiderstand 10 angeordnet ist. Der negative Anschluß der Spannungsquelle Ub, aus der sowohl die Signalquelle 4 als auch die Verstärker 11 und 16 versorgt werden, ist an den Verbindungspunkt zwischen den beiden Meßwiderständen 10 und 30 angeschlossen. Der weitere Aufbau der Verstärkerschaltung 5 ist mit dem Aufbau gemäß dem Ausführungsbeispiel der Fig. 1 identisch. In der Verstärkerschaltung 5 wird gemäß dem Ausführungsbeispiel der Fig. 2 die Differenz zwischen der Spannung am Meßwiderstand 10 und der Spannung am Meßwiderstand 30 gebildet.

In einem praktischen Schaltungsaufbau wurde ein Schaltnetzteil verwendet, das einen dreieckförmigen Störstrom hervorruft. Es hat sich gezeigt, daß die erste Harmonische des Störstromes, die bei 20 kHz liegt, gemäß dem Ausführungsbeispiel der Fig. 1 um 30 dB reduziert wurde und beim Ausführungsbeispiel der Fig. 2 die erste Harmonische um 50 dB reduziert werden konnte.

In den Beispielen gemäß der Fig. 3 und der Fig. 4 werden zwei Verbindungszweige verwendet. Das Beispiel gemäß der Fig. 3 weist eine Speisespannungsquelle 101 auf, die z.B. eine Gleichspannung von 50 V abgibt. Die von der Speisespannungsquelle 101 gelieferte Gleichspannung hat nur Anteile bei einer Frequenz von Null. Die Speisespannungsquelle 101 versorgt über Zuleitungen eine Last 102, die z.B. ein als Aufwärts-Spannungswandler ausgebildetes Schaltnetzteil sein kann. Derartige Schaltnetzteile werden in der Regel bei Schaltfrequenzen von ungefähr 20 kHz bis 200 kHz betrieben. Diese Schaltvorgänge rufen einen Störstrom im Eingangsstrom der Speisespannungsquelle 101 hervor, dessen Frequenzspektrum Anteile bei der Schaltfrequenz und deren Harmonischen aufweist.

Zur Verringerung dieses Störstromes ist eine Kompensationsschaltung vorgesehen, die einen ersten Verbindungszweig mit einem Kondensator 103, mit einer gesteuerten Signalquelle 104 und mit einer Verstärkerschaltung 105 und einen zweiten Verbindungszweig mit einem Kondensator 106, mit einer gesteuerten Signalquelle 107 und mit einer Verstärkerschaltung 108 enthält. Der Strom Ya, der durch die Last fließt, und der den Störstrom enthält, ruft an einem Meßwiderstand 110 einen Spannungsabfall hervor. Der Meßwiderstand 110 sollte vorzugsweise so gewählt werden, daß er einerseits zur Begrenzung der an ihm entstehenden Verluste möglichst klein ist, andererseits aber die an ihm abfallende Spannung einen genügend hohen Pegel zur Ansteuerung der Verstärkerschaltung 105 aufweist. Dieser Widerstand 110 ist einerseits an einen Anschlußpunkt der Last 102 und andererseits an einen mit dem negativen Anschlußpunkt der Speisespannungsquelle 101 verbundenen zweiten Meßwiderstand 130 angeschlossen. Im folgenden wird der Anschlußpunkt zwischen den beiden Meßwiderständen 110 und 130 als Bezugspunkt des ersten Verbindungszweiges bezeichnet.

Am Verbindungspunkt zwischen der Last 102 und dem Meßwiderstand 110 ist die Verstärkerschaltung 105 angeschlossen. Die Verstärkerschaltung 105 enthält einen Verstärker 111, dessen invertierender Eingang über einen Widerstand 112 mit dem oben erwähnten Verbindungspunkt und über einen Widerstand 113 mit seinem Ausgang verbunden ist. An den nichtinvertierenden Eingang des Verstärkers 111 ist ein mit dem Bezugspunkt des ersten Verbindungszweiges verbundener Widerstand 114 und ein mit einer Referenzspannungsquelle Uref verbundener Widerstand 115 gelegt. Des weiteren ist in der Verstärkerschaltung 105 ein Verstärker 116 enthalten, dessen nichtinvertierender Eingang an dem Bezugspunkt des ersten Verbindungszweiges gelegt ist und dessen invertierender Eingang über einen Widerstand 117 mit dem Ausgang des Verstärkers 111 und über einen Widerstand 118 mit seinem Ausgang verbunden ist. Der Ausgang des Verstärkers 116 bildet den Ausgang der Verstärkerschaltung 105.

In der Verstärkerschaltung 105 wird die Differenz zwischen der Spannung am Meßwiderstand 110 und einer am nichtinvertierenden Eingang des Verstärkers 111 liegenden Vergleichsspannung gebildet, die ein Abbild der von der Speisespannungsquelle 101 gelieferten Gleichspannung ist. Die Spannung am Ausgang der Verstärkerschaltung 105 ist abhängig von dem von der Last 102 erzeugten Störstrom. Die Widerstände 112 bis 115 und 117, 118 und die Referenzspannung Uref, die eine Größenordnung kleiner ist als die Gleichspannung der Speisespannungsquelle 101, können so gewählt werden, daß eine gleichspannungsmäßige Anpassung der Verstärkungsschaltung 105 und der folgenden gesteuerten Signalquelle 104 vorhanden ist.

Die gesteuerte Signalquelle 104 enthält einen Leistungsverstärker mit einer komplementären Endstufe der Klasse AB. Die komplementäre Endstufe umfaßt, einen NPN-Transistor 120 und einen PNP-Transistor 121. Der Kollektor des Transistors 121 ist an den Bezugspunkt des ersten Verbindungszweiges und die Basis einerseits an einen mit dem Bezugspunkt des ersten Verbindungszweiges verbundenen Widerstand 122 und andererseits an die Kathode einer Diode 123 angeschlossen. Die Anode der Diode 123 ist einerseits mit dem Ausgang der Verstärkerschaltung 105, die die Steuerspannung

liefert, und andererseits mit der Kathode einer Diode 124 verbunden. An den Anschlußpunkt zwischen der Anode der Diode 124 und einem Widerstand 125 ist die Basis des Transistors 120 gelegt. Eine Versorgungsspannung Ub, die eine Größenordnung geringer ist als die Gleichspannung der Speisespannungsquelle 101, ist an den Kollektor des Transistors 120 und an den anderen Anschlußpunkt des Widerstandes 125 gelegt. Die Emitter der beiden Transistoren 120 und 121 sind über einen Verbindungspunkt mit dem Kondensator 103 verbunden, der wiederum an den positiven Anschlußpunkt der Speisespannungsquelle 101 gelegt ist.

Die gesteuerte Signalquelle 104 treibt abhängig von der von der Verstärkerschaltung 105 gelieferten Ausgangsspannung einen Strom Yc, der ungefähr gleich dem Störstrom ist, durch den Kondensator 103. Abhängig von der angelegten Steuerspannung ist entweder der Transistor 120 oder der Transistor 121 leitend. Wenn der Transistor 120 leitend ist, wird der erforderliche Strom Yc aus der Spannungsquelle gezogen, die die Spannung Ub liefert und die an den negativen Anschlußpunkt der Speisespannungsquelle 101, was hier nicht näher dargestellt ist, angeschlossen ist. Ist der Transistor 121 leitend, fließt der Strom Yc über ihn zum Bezugspunkt des ersten Verbindungszweiges. Der Kondensator 103 verhindert, daß die Gleichspannung der gesteuerten Signalquelle auf die Speisespannungsquelle 101 und die Last einwirkt. An dem Kondensator 103 fällt die Spannungsdifferenz zwischen der Spannung an der Last 102 und der Spannung am Ausgang der Signalquelle 104 ab, die in der Regel eine Größenordnung kleiner ist als die Spannung an der Last 2.

Bedingt durch die nichtidealen Bauelemente und die Nichtlinearität der Signalquelle 104 wird keine vollständige Kompensation des Störstromes erreicht. Eine weitere Reduzierung des Störstromes kann erreicht werden durch einen zweiten Verbindungszweig. Der Störstrom, der nicht über den Kondensator 103 abgeleitet worden ist, soll im folgenden mit Teilstörstrom bezeichnet werden. Dieser Teilstörstrom ruft im Meßwiderstand 130 einen Spannungsabfall hervor. Der Meßwiderstand 130 sollte nach den gleichen Kriterien wie der Meßwiderstand 110 ausgewählt werden. An den negativen Bezugspunkt des ersten Verbindungszweiges ist die Verstärkerschaltung 108 angeschlossen. Die Verstärkerschaltung 108 enthält einen Verstärker 131, dessen invertierender Eingang über einen Widerstand 132 mit dem negativen Bezugspunkt des ersten Verbindungszweiges und über einen Widerstand 133 mit seinem Ausgang verbunden ist. Am nichtinvertierenden Eingang des Verstärkers 131 ist ein an den negativen Bezugspunkt der Speisespannungsquelle 101 angeschlossener Widerstand 134 gelegt und einer mit der Referenzspannungsquelle Uref verbundener Widerstand 135. Des weiteren ist

in der Verstärkerschaltung 108 ein Verstärker 136 vorhanden, dessen nichtinvertierender Eingang an den negativen Anschluß der Speisespannungsquelle 101 und dessen invertierender Eingang über einen Widerstand 137 mit dem Ausgang des Verstärkers 131 und über einen Widerstand 138 mit seinem Ausgang verbunden ist. Der Ausgang der Verstärkerschaltung 108 ist auch der Ausgang des Verstärkers 136.

Die Verstärkerschaltung 108 steuert eine gesteuerte Signalquelle 107, die einen Leistungsverstärker mit einer komplementären Endstufe der Klasse AB umfaßt. Die komplementäre Endstufe enthält einen NPN-Transistor 140 und einen PNP-Transistor 141. Der Kollektor des Transistors 140 ist an die Versorgungsspannung Ub gelegt und mit einem Widerstand 142 verbunden, dessen anderer Anschlußpunkt mit der Basis des Transistors 140 und mit der Anode einer Diode 143 verbunden ist. Die Kathode der Diode 143, die Anode einer Diode 144 und der Ausgang des Verstärkers 136 sind an einen gemeinsamen Verbindungspunkt geschaltet. Die Kathode der Diode 144 ist an einen mit dem negativen Anschluß der Speisespannungsquelle 101 verbundenen Widerstand 145 und an die Basis des Transistors 141 gelegt. Der Kollektor des Transistors 141 ist an den negativen Anschluß der Speisespannungsquelle 101 angeschlossen. Die miteinander verbundenen Emitter der Transistoren 140 und 141 sind über den Kondensator 106 an dem positiven Anschlußpunkt der Speisespannungsquelle 101 angeschlossen.

Die Wirkungsweise des zweiten Verbindungszweiges, der die Verstärkerschaltung 108, die gesteuerte Signalquelle 107 und den Kondensator 106 enthält, ist dieselbe wie oben bei der Erläuterung des ersten Verbindungszweiges beschrieben ist. Der Teilstörstrom wird weitgehend über den Kondensator 106 abgeleitet. Mit einem oder mehreren weiteren Verbindungszweigen kann eine weitere Verringerung des restlichen Störstromes erreicht werden.

Durch eine Maßnahme, die keinen weiteren Verbindungszweig erfordert, kann der restliche Störstrom weiter vermindert werden. Diese Möglichkeit wird in einem Ausführungsbeispiel, das in Fig. 4 dargestellt ist, aufgezeigt. Die Schaltungselemente mit den gleichen Funktionen wie in Fig. 3 sind mit denselben Bezugszeichen versehen. Ein Unterschied im Ausführungsbeispiel der Fig. 4 ergibt sich gegenüber dem Beispiel gemäß der Fig. 3 nur in der Verstärkerschaltung 105 und 108. An der Verbindung des Meßwiderstandes 110 und der Last 102 ist der Widerstand 112 angeschlossen, der andererseits mit dem invertierenden Eingang des Verstärkers 111 verbunden ist. Der invertierende Eingang ist über den Widerstand 113 mit seinem Ausgang verbunden. Der nichtinvertierende Eingang ist in diesem Ausführungsbeispiel an den Verbindungspunkt zwischen den Meßwiderstand l30 und einem weiteren Meßwiderstand l50 gelegt, der andererseits mit dem der Last l02 abgewandten Anschlußpunkt des Widerstandes ll0 verbunden ist. Der weitere Aufbau der Verstärkerschaltung l05 ist identisch mit dem Aufbau gemäß dem Beispiel der Fig. 3. An dem nichtinvertierenden Eingang des Verstärkers lll liegt eine Spannung, die über den Meßwiderstand l50 abfällt. Diese Spannung ist proportional dem durch diesen Widerstand l50 fließenden Strom. In der Verstärkerschaltung l05 wird gemäß dem Ausführungsbeispiel der Fig. 4 die Spannung an dem Meßwiderstand l50, die proportional dem Strom der Spannungsquelle l0l und einem geringen Teilstörstrom ist, dazu verwendet, um einerseits die Vergleichsspannung zu erzeugen und andererseits den Teilstörstrom weiter zu reduzieren.

In der Verstärkerschaltung l08 ist der Widerstand l32 an den Verbindungspunkt zwischen den beiden Widerständen l30 und l50 gelegt. An den invertierenden Eingang des Verstärkers l3l ist einerseits dieser Widerstand l32 und der Widerstand l33 gelegt, der mit seinem anderen Anschluß an den Ausgang des Verstärkers l3l gelegt ist. Der nichtinvertierende Eingang des Verstärkers l3l ist mit dem negativen Anschlußpunkt der Speisespannungsquelle l0l verbunden. Zwischen dem negativen Anschlußpunkt der Speisespannungsquelle l0l und dem Anschlußpunkt des Widerstandes l30, der keine Verbindung mit dem Widerstand l50 aufweist, ist ein Meßwiderstand l5l angeschlossen. Der weitere Aufbau der Verstärkerschaltung l08 ist mit dem Aufbau gemäß dem Beispiel der Fig. 3 identisch. Die Spannung, die an diesem Meßwiderstand l5l abfällt, ist proportional dem durch diesem Widerstand fließenden Strom. Der Widerstand l5l hat die gleiche Funktion wie der Widerstand l50. Der Widerstand l30 kann entfallen, wenn der Widerstand l32 nicht, wie in Fig. 4 gezeigt, zwischen den beiden Widerständen l30 und l50, sondern zwischen den Widerständen l50 und ll0 angeschlossen wird.

In einem praktischen Schaltungsaufbau wurde ein Schaltnetzteil verwendet, das einen dreieckförmigen Störstrom hervorruft. Es hat sich gezeigt, daß die erste Harmonische des Störstromes, die bei 20 kHz liegt, gemäß dem Ausführungsbeispiel der Fig. 4 um mehr als 50 dB reduziert

Die erfindungsgemäße Schaltungsanordnug ist nicht auf die Verwendung einer Speisespannungsquelle beschränkt, die eine Gleichspannung liefert, sondern kann ebenso verwendet werden, wenn eine Speisespannungsquelle eine Wechselspannung liefert. Die Anteile der Wechselspannungsquelle müssen aber bei viel geringeren Frequenzen liegen als die Anteile des Störstromes.

**Patentansprüche**

1. Schaltungsanordnung mit einer Last (2 102), die mit einer Speisespannungsquelle (1) gekoppelt ist und die in dem Strom der Speisespannungsquelle (1 101)einen Störstrom hervorruft, dessen Frequenz wesentlich höher ist als die des Stromes der Speisespannungsquelle (1), mit einer zur Verringerung des Störstromes vorgesehenen Kompensationsschaltung, die einen in den Zuleitungen zwischen der Last (2) und der Speisespannungsquelle (1) angeordneten Verbindungszweig mit einem Kondensator (3 103,106) und einer gesteuerten Signalquelle (4) enthält, die einen Strom durch den Kondensator (3) liefert, der von einem aus dem Störstrom abgeleiteten Steuersignal abhängig ist und dessen Größe und Phase so bemessen ist, daß der Störstrom größtenteils durch den Kondensator (3) fließen kann, und mit einem ersten Meßwiderstand (10), dadurch gekennzeichnet, daß der erste Meßwiderstand (10 110,130) in einer Zuleitung zwischen der Last (2) und der Reihenschaltung aus dem Kondensator (3) und der Signalquelle (4 104,107) angeordnet ist, daß ein zweiter Meßwiderstand (30 150,151), an dem eine Vergleichsspannung gewonnen wird, zwischen der Speisespannungsquelle (1) und dem Verbindung zweig angeordnet ist und daß eine Verstärkerschaltung (5) vorgesehen ist, der an ihrem ersten Eingang die am ersten Meßwiderstand (10) abfallende Spannung und der an ihrem zweiten Eingang die Vergleichsspannung zugeführt wird und die ein Steuersignal für die gesteuerte Signalquelle (4) liefert, wobei die Verstärkerschaltung (5) als Klasse-AB-Verstärker ausgebildet ist.

2. Schaltungsanordnung nach Anspruch 1, dadurch gekennzeichnet, daß die Vergleichsspannung dem zeitlichen Verlauf des Stromes der Speisespannungsquelle (1) annähernd entspricht.

3. Schaltungsanordnung nach Anspruch 1 oder 2, dadurch gekennzeichnet, daß die Kompensationsschaltung mindestens zwei Verbindungszweige (103,104,106,107) enthält, daß erste Meßwiderstände (110, 130) in einer Zuleitung jeweils zwischen den Verbindungszweigen und zwischen der Last (102) und einem Verbindungszweig angeordnet sind und, und daß jeder Signalquelle (104, 107) eine Verstärkerschaltung (105, 108) zugeordnet ist, der an ihrem ersten Eingang die am jeweiligen ersten Meßwiderstand (110, 130) abfallende Spannung und an ihrem zweiten Eingang eine Ver-

gleichspannung zugeführt wird, und die Verstärkerschaltung eine Ausgangsspannung bildet, die das Steuersignal darstellt, und daß die Vergleichsspannung an zweiten Meßwiderständen (150, 151) gewonnen wird, die jeweils in einer Zuleitung zwischen den Verbindungszweigen und zwischen der Speisespannungsquelle (101) und einem Verbindungszweig angeordnet sind und die jeweils mit einem Verbindungszweig und einem ersten Meßwiderstand (110, 130) verbunden sind, an dem die andere Eingangsspannung der Verstärkerschaltung (105, 108) abfällt.

4. Schaltungsanordnung nach einem der vorhergehenden Ansprüche,
   dadurch gekennzeichnet, daß eine gesteuerte Signalquelle (4; 104, 107) einen Leistungsverstärker mit einer komplementären Endstufe umfaßt.

5. Schaltungsanordnung nach einem der vorhergehenden Ansprüche,
   dadurch gekennzeichnet, daß die Last (2, 102) als Schaltnetzteil ausgebildet ist.

## Claims

1. A circuit arrangement comprising a load (2, 102) which is coupled to a supply voltage source (1) and which produces, in the current of the supply voltage source (1, 101), an interference current whose frequency is considerably higher than that of the current of the supply voltage source (1), and comprising a compensation circuit which serves to reduce the interference current and which comprises, connected in the supply leads between the load (2) and the supply voltage source (1), a connection branch with a capacitor (3, 103, 106) and a controlled signal source (4) which supplies the capacitor (3) with a current which depends on a control signal derived from the interference current and whose magnitude and phase are such that the interference current can flow mainly through the capacitor (3), and also comprising a first measuring resistor (10), characterized in that the first measuring resistor (10, 110, 130) is arranged in a supply lead between the load (2) and the series connection of the capacitor (3) and the signal source (4, 104, 107), a second measuring resistor (30, 150, 151) wherefrom a comparison voltage is derived being arranged between the supply voltage source (1) and the connection branch, there also being provided an amplifier circuit (5) whose first input receives the voltage dropping off across the first measuring resistor (10), its second input receiving the comparison voltage, the amplifier circuit (5) supplying a control signal for the controlled signal source (4) and being constructed as a class AB amplifier.

2. A circuit arrangement as claimed in Claim 1, characterized in that the comparison voltage corresponds approximately to the variation in time of the supply voltage source (1).

3. A circuit arrangement as claimed in Claim 1 or 2, characterized in that the compensation circuit comprises at least two connection branches (103, 104, 106, 107), in that first measuring resistors (110, 130) are each time arranged in a supply lead between the connection branches and between the load (102) and a connection branch, in that with each signal source (104, 107) there is associated an amplifier circuit (105, 108) whose first input receives the voltage dropping off across the relevant first measuring resistor (110, 130) and whose second input receives a comparison voltage, which amplifier circuit forms an output voltage which represents the control signal, and in that the comparison voltage is derived from second measuring resistors (150, 151) which are each time arranged in a supply lead between the connection branches and between the supply voltage source (101) and a connection branch and which are connected each time to a connection branch and a first measuring resistor (110, 130) whereacross the other input voltage of the amplifier circuit (105, 108) drops off.

4. A circuit arrangement as claimed in any one of the preceding Claims, characterized in that a controlled signal source (4, 104, 107) comprises a power amplifier with a complementary output stage.

5. A circuit arrangement as claimed in any one of the preceding Claims, characterized in that the load (2, 102) is constructed as a combinatorial circuit part.

## Revendications

1. Montage de circuit avec une charge (2, 102) qui est couplé à une source de tension d'alimentation (1) et qui, dans le courant de la source de tension d'alimentation (1, 101), produit un courant parasite dont la fréquence est sensiblement supérieure à celle du courant de la source de tension d'alimentation (1), comportant un circuit de compensation prévu pour réduire le courant parasite, qui comprend une branche de liaison disposée dans les lignes d'alimentation entre la charge (2) et la source de tension d'alimentation (1) et pourvu d'un condensateur (3, 103, 106) et d'une source de signaux commandée (4), qui fournit un courant par le condensateur (3), qui dépend d'un signal de commande dérivé du courant parasite et dont la grandeur et la phase sont dimensionnées d'une manière telle que le courant parasite puisse, en grande partie, traverser le condensateur (3), et comportant une première résistance de mesure (10), caractérisé en ce que la première résistance de mesure (10, 110, 130) est installée dans une ligne d'alimentation entre la charge (2) et le montage en série du condensateur (3) et de la source de signaux (4, 104, 107), qu'une seconde résistance de mesure (30, 150, 151) sur laquelle une tension de comparaison est obtenue, est installée entre la source de tension d'alimentation (1) et la branche de liaison et qu'un circuit amplificateur (5) est prévu qui reçoit, sur sa première entrée, la tension chutant au passage de la première résistance de mesure (10) et, sur sa seconde entrée, la tension de comparaison, et qui fournit un signal de commande pour la source de signaux commandée (4), le circuit amplificateur (5) ayant la forme d'un amplificateur de la classe AB.

2. Montage de circuit suivant la revendication 1, caractérisé en ce que la tension de comparaison correspond approximativement à l'allure dans le temps du courant de la source de tension d'alimentation (1).

3. Montage de circuit suivant la revendication 1 ou 2, caractérisé en ce que le circuit de compensation comprend au moins deux branches de liaison (103, 104, 106, 107), que des premières résistances de mesure (110, 130) sont installées dans une ligne d'alimentation, chaque fois entre les branches de liaison et entre la charge (102) et une branche de liaison, et qu'à chaque source de signaux (104, 107) est associé un circuit amplificateur (105, 108) qui reçoit, sur sa première entrée, la tension chutant au passage de la première résistance de mesure respective (110, 130) et, sur sa seconde entrée, une tension de comparaison, et le circuit amplificateur forme une tension de sortie qui représente le signal de commande et que la tension de comparaison est obtenue sur des secondes résistances de mesure (150, 151) qui sont installées chaque fois dans une ligne d'alimentation entre les branches de liaison et entre la source de tension d'alimentation (101) et une branche de liaison et qui sont chaque fois reliées à une branche de liaison et à une première résistance de mesure (110, 130) au passage de laquelle l'autre tension d'entrée du circuit amplificateur (105, 108) chute.

4. Montage de circuit suivant l'une quelconque des revendications précédentes, caractérisé en ce qu'une source de signaux commandée (4, 104, 107) comprend un amplificateur de puissance avec un étage final complémentaire.

5. Montage de circuit suivant l'une quelconque des revendications précédentes, caractérisé en ce que la charge (2, 102) a la forme d'une partie de réseau de commutation.

FIG. 1

FIG. 2

11

FIG. 3

FIG. 4